# EUROPÄISCHE PATENTSCHRIFT

(11) **EP 0 798 300 B1**
(45) Veröffentlichungstag und Bekanntmachung des Hinweises auf die Patenterteilung: **31.05.2000**
(21) Anmeldenummer: 96103728.0
(22) Anmeldetag: 09.03.1996
(51) Int. Cl.: C07F 5/06, C04B 24/04

(54) **Aluminiumverbindungen**
Aluminium compounds
Composées d'aluminium

(43) Veröffentlichungstag der Anmeldung: 01.10.1997
(73) Patentinhaber: BK Giulini Chemie GmbH & Co. OHG, 67065 Ludwigshafen (DE)
(72) Erfinder: Lunkenheimer, Rudolf, Dr., 55263 Wackernheim (DE); Potencsik, Istvan, Dr., 68169 Mannheim (DE); Sedelies, Reinhold, Dr., 67105 Schifferstadt (DE); Weih, Heinz-Willi, 67071 Ludwigshafen (DE)

(56) Entgegenhaltungen:
- EP-A- 0 465 991
- EP-A- 0 636 580
- DE-C- 975 058
- DATABASE WPI Section Ch, Week 9047 Derwent Publications Ltd., London, GB; Class L02, AN 90-351340 XP002011443 & JP-A-02 252 642 (NIPPON CHEM IND KK) , 11.Oktober 1990
- CHEMICAL ABSTRACTS, vol. 115, no. 10, 9.September 1991 Columbus, Ohio, US; abstract no. 98048n, T. FROELICH: Seite 360; XP000251449 & PL-A-148 876 (INSTYTUT PRZEMYSLU ORGANICZNEGO) 31.Mai 1990

## Beschreibung

Die vorliegende Erfindung betrifft Aluminiumverbindungen, die als abbindebeschleunigende Zusatzmittel für hydraulische Mischungen, wie Zement, Mörtel und Beton einsetzbar sind und ein Verfahren zu ihrer Herstellung.

Es ist schon seit langem ein Problem, ein optimales abbindebeschleunigendes Zusatzmittel zu finden. Probleme in diesem Sinne umfassen Begriffe, wie pH-Neutralität, die Eignung der Produkte für die Herstellung von Spritzbeton bzw. ihre Verwendung in der Spritzbetontechnologie, die Erreichung guter Früh- und Endfestigkeitswerte, gute Verarbeitbarkeit.
So gibt es im Stand der Technik eine Reihe verschiedener Abbindebeschleunigertypen. Solche Typen umfassen z.B. die Verbindungen Calciumchlorid, Calciumaluminat, Natriumaluminat, Aluminiumsulfat-Typen, Aluminiumhydroxyde in Mischungen mit Aluminiumsulfaten u.a. Der Trend bewegt sich deutlich zu den alkalifreien, flüssigen bzw. pumpbaren Beschleunigern, bedingt insbesondere durch die Forderung der Bauindustrie nach ökonomischen, vor allem aber ökologisch sinnvollen Alternativen.
So ist z.B. in der EP 0 076 927 B1 ein alkali- und chloridfreier Abbindebeschleuniger beschrieben , der amorphes Aluminiumhydroxyd in Mischung mit wenigstens einem wasserlöslichen Sulfat und/oder Nitrat und/oder Formiat enthält.
In der EP 0 657 398 A1 wird ebenfalls eine Mischung beschrieben, bestehend aus mindestens einer wasserlöslichen Sulfatverbindung eines mehrwertigen Kations und einem weiteren Bestandteil aus der Gruppe der Calciumaluminate, Calciumsulfoaluminate und basischen Aluminiumsulfate, die alle frei sind von Alkalimetallionen.
In der EP 0 602 541 A1 wird eine Mischung beschrieben, die einen Kohlenesäureester, neben den üblichen Zusatzmitteln, wie Aluminiumhydroxyd, enthält.
In der DE-25 34 099 C2 ist ein Verfahren zur Beschleunigung der Aushärtung von Portlandzementmassen beschrieben, das dadurch gekennzeichnet ist, daß als Beschleuniger eine alpha-Hydroxycarbonsäure verwendet wird. Eine solche Säure ist zB. die Glykolsäure bzw. deren Salze, Milchsäure und deren Salze und einige Derivate der Mandelsäure.
In der FR -PS 20 70 335 ist es bekannt, dem Zement beim Anmachen zur Beschleunigung des Aushärtens eine Kombination von 0,5 bis 5 % Alkalialuminat als Beschleuniger und 0,05 bis 2 % Hydroxysäure zuzusetzen. Diese Zementmasse soll so eine ausreichende Verarbeitungszeit und eine schnelle Aushärtung aufweisen. Hier wirkt die Hydroxycarbonsäure als Verflüssiger.

Weiterhin ist aus DD 266344 A1 bekannt, sulfat- und chloridfreie Aluminiumverbindungen der allg. Formel: Al(OH)₂ R x H₂O und Al(OH)R₂ xH₂O und AlR₃ x H₂O , mit R=Formiat, Acetat und Nitrat, als Erstarrungs- und Erhärtungsbeschleuniger für Portlandzement enthaltende hydraulisch abbindende Mischungen anzuwenden.

Die Liste der Anmeldungen bzw. Patente, in denen Zusätze zur Abbindebeschleunigung beschrieben sind, ließe sich noch beliebig fortsetzen. Es sind zwar eine Reihe von Verbindungen bekannt, aber die heute meisteingesetzen Abbindebeschleuniger bestehen immer noch aus Alkalialuminatverbindungen, den Natrium oder Kaliumaluminaten, oft in Pulver, aber auch in flüssiger Form. Diese Verbindungen sind jedoch bedingt durch den Gehalt an freien, stark ätzenden Laugen, immer noch gesundheitsgefährdend für den Verarbeiter.
Der vorliegenden Erfindung lag die Aufgabe zugrunde, die obenerwähnten Probleme, insbesondere die Verarbeitbarkeit zu verbessern, aber auch Produkte zu finden, die einerseits pH-neutral sind, andererseits aber kurze Abbindezeiten verbunden mit guten Festigkeitswerten gewährleisten.
Überraschenderweise konnten die hier geschilderten Probleme durch Aluminiumverbindungen, die als abbindebeschleunigende Zusatzmittel einsetzbar sind, gelöst werden, die die folgende allg. Formel aufweisen:

Al(OH)ₐ(CO₃)_{b}(SO₄)_{c}R_{d}

in der die Indices die folgende Bedeutung haben:
a=3 - 2b - 2c -xd ist, wobei x ein Maß für die Basizität der organischen Säure ist, und
b= 0,05 bis 0,5
0 < c ≤ 0,4
d= 0,01/x bis 0,9/x
wobei R das Anion R' COO ⁻einer organischen Carbonsäure ist.

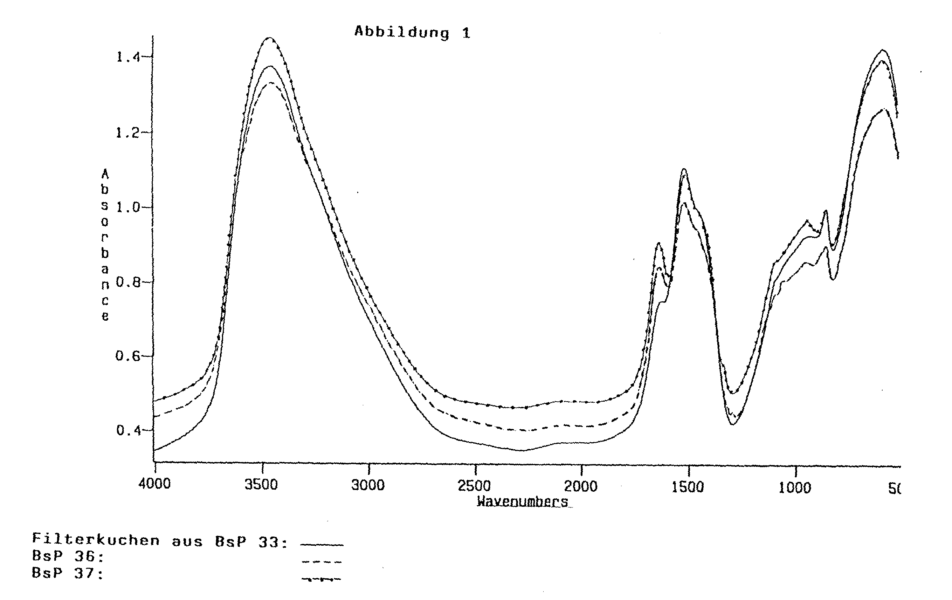

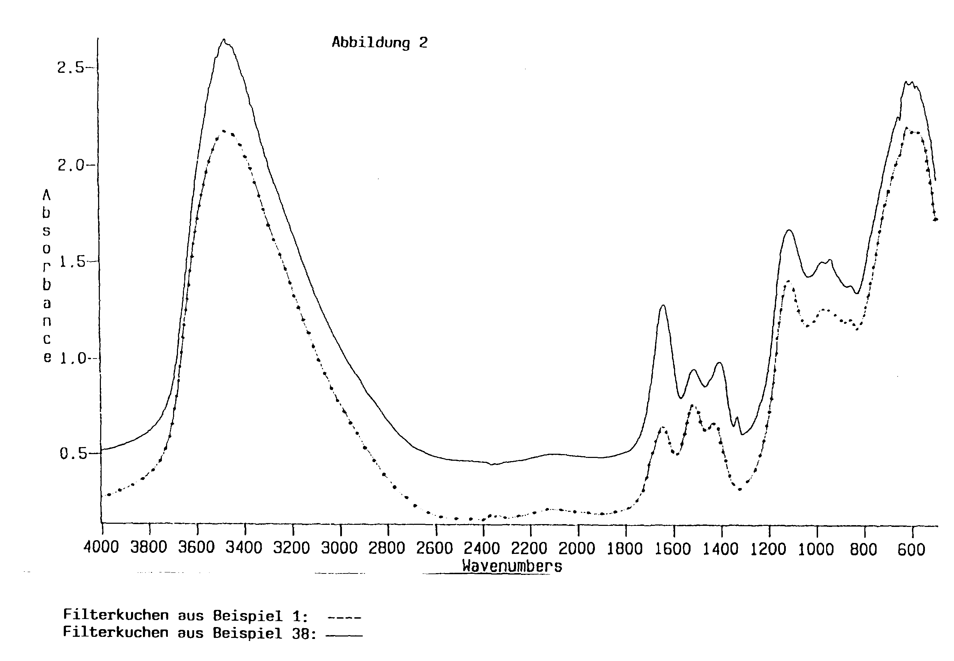

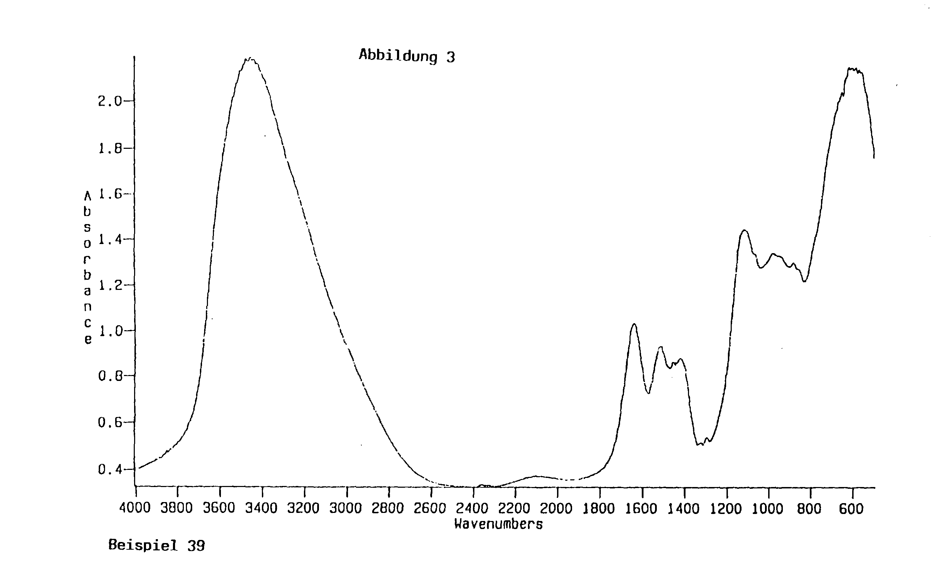

Die erfindungsgemäßen Aluminiumverbindungen sind in einer zweistufigen Reaktion erhältlich. Zunächst wird als Ausgangsmaterial ein Aluminiumhydroxycarbonat oder ein Aluminiumhydroxycarbonatsulfat durch Fällung hergestellt und dieses dann mit einer organischen Carbonsäure, z.B. einer alpha-Hydroxycarbonsäure, einer Polyhydroxycarbonsäure oder Polycarbonsäure umgesetzt. Die Herstellung der als Ausgangsmaterialien geeigneten Verbindungen ist im Stand der Technik bekannt. Bei einigen dieser Ausgangsverbindungen ist es vorteilhaft, wenn diese im frisch gefällten Zustand nach der Filtration noch in Form eines feuchten Filterkuchens mit der entsprechenden Säure umgesetzt werden. Bei dieser Umsetzung ist es auch wichtig, daß der Filterkuchen , der die Aluminiumkomponente enthält, während der Umsetzung mit den organischen Carbonsäuren intensiv vermischt wird. Als Mischaggregate können Rührer, Zahnscheibe, Mischer, Paddelschnecke u. a. benutzt werden. Dabei verflüssigt sich der feste Filterkuchen. Es wurde gefunden, daß lediglich carbonathaltige Filterkuchen bei der Reaktion mit den organischen Säuren stabile, pumpfähige Dispersionen ergeben, was bei der Anwendung der erfindungsgemäßen Aluminiumverbindungen als Abbindebeschleuniger bezgl. ihrer Handhabung erhebliche Vorteile bietet. Der Carbonatgehalt /CO₃²⁻ / des Filterkuchens bezogen auf den Al₂O₃ Gehalt sollte dabei mindestens 5,9 % betragen. Zur weiteren Homogenisierung können Rühraggreate wie Turrax oder Hochdruckhomogenisator eingesetzt werden.
Als bevorzugte organische Säuren können Milchsäure, Glykolsäure, Oxalsäure, Äpfelsäure, Weinsäure, Zitronensäure, aber auch Polyacrylsäuren eingesetzt werden. Ebenso können die löslichen Salze dieser Säuren oder Mischungen dieser Säuren bzw. deren Salze verwendet werden.
Bei der Reaktion mit den organischen Carbonsäuren sind die Reaktionszeiten abhängig von der Temperatur und von der Menge der organischen Säure.
So lassen sich die in **Tabelle 1** zitierten Filterkuchen in den Beispielen 1 - 32 bei 5 - 30 °C innerhalb 30 bis 120 min mit den organischen Carbonsäuren umsetzen. Dagegen reagierte der Filterkuchen nach Bsp. 33, **Tab. 1** innerhalb 3 h bei 80 °C mit Milchsäure zur erfindungsgemäßen Verbindung.
Bei der Reaktion bildet sich überrraschend die erfindungsgemäße Aluminiumhydroxycarbonatsulfat-Verbindung, worin die Anionen der organischen Carbonsäure chemisch gebunden sind. Zum Nachweis des Einbaus der organischen Carbonsäureanionen in die Aluminiumhydroxycarbonate bzw. Aluminiumhydroxycarbonatsulfate dienten IR-spektroskopische Untersuchungen. Aus diesen Spektren, Abbildungen 1 bis 3, kann man die verschiedenen Absorptionsbanden erkennen, die den einzelnen Anionen zugeordnet werden können. So ist z.B. die Absorptionsbande der R-CO₂⁻ Gruppe bei 1630 cm⁻¹, die der CO₃²⁻ Gruppe bei 1430 cm⁻¹ und die der SO₄²⁻ Gruppe bei 1100 cm⁻¹ zu sehen. Aus der großen Intensität der Bande bei 1630 cm⁻¹ kann man eindeutig erkennen, daß z.B. das Anion der Milchsäure, das Lactat-Anion, gemäß Beispiel 1 oder 2, in chemisch gebundener Form vorliegt.
Die erfindungsgemäßen Ausgangsverbindungen können entweder ausgehend von sauren Aluminiumsalzen und Laugen, Carbonaten, Hydrogencarbonaten und Laugen in Kombination mit Kohlendioxid oder ausgehend von Aluminaten und Säuren in Gegenwart von Carbonaten, Hydrogencarbonaten und/oder Kohlendioxid oder ausgehend von Aluminaten und sauren Aluminiumsalzen in Gegenwart von Carbonaten, Hydrogencarbonaten und/oder Kohlendioxid hergestellt werden. Als saure Aluminiumsalze können u. a. eingesetzt werden: AlCl₃, z..B. AlCl₃ aus der Friedel-Crafts Synthese, Al₂(SO₄)₃, basische Aluminiumchloride und basische Aluminiumsulfate.

Als Aluminate können u.a. eingesetzt werden: Na-Aluminate, K-Aluminate, Eloxallaugen, d.h. Restlösungen aus der alkalischen Oberflächenbehandlung von Aluminium. Als Laugen können u.a eingesetzt werden Natronlauge, Kalilauge, Ammoniak. Als Säuren können u.a. eingesetzt werden: Salzsäure, Schwefelsäure und eine Abfallschwefelsäure, z.B. auch solche, die bei der saueren Oberflächenbehandlung des Aluminiums entstehen. Als Carbonate können u.a. Natriumcarbonat, Kaliumcarbonat, Ammoniumcarbonat eingesetzt werden. Neben den Carbonaten kommen auch Hydrogencarbonate z.B. Natriumhydrogencarbonat, Kaliumhydrogencarbonat und Ammoniumhydrogencarbonat. zur Anwendung.
Die Herstellung der Aluminiumhydroxycarbonate und Aluminiumhydroxycarbonatsulfate ist sowohl über eine Parallelfällung, als auch über eine Vorlagefällung möglich. Im Falle einer Parallelfällung werden alle Komponenten unter Rühren gleichzeitig in den Reaktor bei einem pH-Wert von 6 bis 10, vorgzugsweise 7 bis 9 zudosiert. Bei der Vorlagefällung wird die saure Aluminiumkomponente vorgelegt und die Base bis zur Erreichung eines pH-Wertes von 6 bis 10, vorzugsweise von 7 bis 9, unter Rühren zudosiert.

Die Herstellung der erfindungsgemäßen Verbindungen wird anhand der folgenden Beispiele verdeutlicht, wobei diese Verfahren die Erfindung nicht beschränken.

### Beispiel 1

In einem 50 m³-Reaktor mit Rührer werden 18 m³ Wasser vorgelegt. Innerhalb von 2 Stunden werden bei einem pH-Wert im Bereich von 7 - 9 gleichzeitig 7,5 to Eloxallauge (9,91 %Al₂O₃), 9,8 to Abfallschwefelsäure(14,71 % SO₄; 1,86 % Al₂O₃) und 2,4 to Na₂CO₃-Lösung (9 %) zudosiert.Nach einer Nachrührzeit von einer Stunde wurde das ausgefallene Aluminiumhydroxycarbonatsulfat über eine Filterpresse filtriert, gewaschen bis das Filtrat mit BaCl₂ sulfatfrei reagierte und abgepreßt. Der Filterkuchen hatte einen Al₂O₃-Gehalt von 18,8 %, einen CO₂-Gehalt von 1,8 % und einen SO₄²⁻-Gehalt von 2,3 %. 1 to des Filterkuchens wurde auf der Paddelschnecke 90 Minuten lang mit 24,15 kg 80 %iger Milchsäure intensiv vermischt. Das Reaktionsprodukt, das in Form einer pumpfähigen Dispersion erhalten wurde, wurde über einen In-line Turrax in den Lagerbehälter gepumpt.

### Beispiel 2

Der Filterkuchen wurde analog Beispiel 1 hergestellt mit dem Unterschied, daß 2,8 to 9 % ige Sodalösung eingesetzt wurden. Der Filterkuchen hatte einen Al₂O₃-Gehalt von 18,1 %, einen CO₂-Gehalt von 2,1 % und einen SO₄² -Gehalt von 2,0 %. 1 to des Filterkuchens wurde auf der Paddelschnecke 90 min mit 23,22 kg 80 %iger Milchsäure intensiv vermischt. Das weitere Vorgehen war analog Beispiel 1.

### Beispiele 3-11

In einem 1 m³-Reaktor mit Rührer werden 700 kg Wasser vorgelegt. Innerhalb einer Stunde werden bei einem pH-Wert im Bereich von 7 - 9 gleichzeitig 140 kg Eloxallauge (12,7 % Al₂O₃), 221 kg Abfallschwefelsäure (2,1 % Al₂O₃) und 64 kg 9,5%ige Sodalösung zudosiert. Nach einer Nachrührzeit von 30 min wurde das ausgefallene Aluminiumhydroxycarbonatsulfat über eine Filterpresse filtriert, gewaschen bis das Filtrat mit BaCl₂ sulfatfrei reagierte und abgepreßt. Der Filterkuchen hatte einen Al₂O₃-Gehalt von 16,5 %, einen CO₂-Gehalt von 2,4 % und einen SO₄²⁻-Gehalt von 1,6 %.
1 kg Filterkuchen wurde jeweils mit den in **Tabelle 1** angegebenen Mengen an organischen Säuren mit Hilfe einer Zahnscheibe 45 min bei 25 °C und 1500 Upm zur Reaktion gebracht.

### Beispiele 12 - 24

In einem 1m³-Reaktor mit Rührer werden 450 kg Wasser vorgelegt. Innerhalb einer Stunde werden bei einem pH-Wert im Bereich 7 - 9 gleichzeitig 130 kg Elloxallauge (10,68 % Al₂O₃), 160 kg Abfallschwefelsäure (1,7 % Al₂O₃) und 200 kg 9,5 %-ige Sodalösung zudosiert. Die Nachrührzeit und Aufarbeitung des Filterkuchens erfolgte wie in den Beispielen 3 - 11 angegeben. Der Filterkuchen hatte einen Al₂O₃-Gehalt von 15,4 %, einen CO₂-Gehalt von 4,0 % und einen SO₄²⁻-Gehalt von 0,2 %.
1 kg Filterkuchen wurde jeweils mit den in **Tabelle 1** angegebenen Mengen an organischen Säuren mit Hilfe einer Zahnscheibe 45 min bei 20 °C und 1500 Upm zur Reaktion gebracht.

### Beispiele 25 bis 30

1 kg des Filterkuchens aus Beispiel 1 wurde jeweils mit den in **Tabelle 1** angegebenen Mengen an organischen Säuren mit Hilfe einer Zahnscheibe 45 min bei 25 °C und 1500 Upm zur Reaktion gebracht.

### Beispiele 31 und 32

In einem 1m³-Reaktor mit Rührer werden 574 kg Wasser vorgelegt. Innerhalb einer Stunde werden bei einem pH-Wert von 8 60,5 kg Natriumaluminatlösung (19 % Al₂O₃) und 140,2 kg Aluminiumchloridlösung (aus Friedel Crafts-Synthese, 3,06 % Al₂O₃) zudosiert, wobei gleichzeitig über eine Fritte 7,8 kg CO₂ in die Reaktionsmischung eingespeist werden.
Nach einer Nachrührzeit von 30 min wurde das ausgefallene Aluminiumhydroxycarbonat über eine Filterpresse filtriert, chloridfrei gewaschen und abgepreßt.
Der Filterkuchen hatte einen Al₂O₃-Gehalt von 16,9 % und einen CO₂-Gehalt von 4,1 %.
1 kg des Filterkuchens wurde jeweils mit den in **Tabelle 1** angegebenen Mengen an organischen Säuren mit Hilfe einer Zahnscheibe 45 min bei 25 °C und 1500 Upm zur Reaktion gebracht.

### Beispiel 33

In einem 10 dm³ Becherglas mit Rührer werden 5000 g vollentsalztes Wasser vorgelegt. Innerhalb einer Stunde werden bei einem pH-Wert im Bereich 7 - 8 gleichzeitig 1250 g Al₂(SO₄)₃-Lösung (4 % Al₂O₃) und 1660 g 9,5%ige Sodalösung zudosiert. Nach einer Nachrührzeit von 30 min wurde das ausgefallene Aluminiumhydroxycarbonatsulfat über eine Drucknutsche abfiltriert und sulfatfrei gewaschen.Der Filterkuchen hatte einen Al₂O₃-Gehalt von 13 %, einen CO₂-Gehalt von 4,9 % und einen SO₄²⁻-Gehalt von 0,13 %. 35 g des Filterkuchens wurden in einem 250 ml-Rundkolben mit Rührer und Rückflußkühler mit 11,55 g 42,07 %iger Milchsäure versetzt und 3 Stunden bei 80 °C gerührt. Es entstand eine hochviskose, leicht opake Flüssigkeit.

### Beispiele 34 und 35:

Je 100 g des unter Beispiel 33 hergestellten Filterkuchens wurden jeweils mit den in **Tabelle 1** angegebenen Mengen an organischen Säuren mit Hilfe einer Zahnscheibe 45 min bei 25 °C und 1500 Upm zur Reaktion gebracht.

### Beispiel 36:

7 g der Verbindung aus Beispiel 34 wurden über einen 1,2 µm Celluloseacetatfilter unter Vakuum abfiltriert. Danach wurde der Rückstand 5 mal mit jeweils 10 g vollentsalztem Wasser 10 min aufgeschlemmt und erneut filtriert. Anschließend wurde der Rückstand im Rotationsverdampfer bei einer Badtemperatur von 70 °C im Vakuum vorgetrocknet, 36 h über P₂O₅ getrocknet und IR-spektroskopisch untersucht.

### Beispiel 37:

Behandlung der Verbindung aus Beispiel 35 analog Beispiel 36

### Beispiel 38:

5 g der Verbindung aus Beispiel 27 wurden analog Beispiel 36 aufbereitet.

### Beispiel 39:

5 g der Verbindung aus Beispiel 2 wurden analog Beispiel 36 aufbereitet.

### Beispiele 40 bis 47

1 kg Filterkuchen aus Beispiel 12 wurde jeweils mit den in **Tabelle 2** angegebenen Mengen an anorganischen Säuren mit Hilfe einer Zahnscheibe 45 min bei 25 °C und 1500 kpm umgesetzt. Mit den erhaltenen Verbindungen wurden 28-Tage-Festigkeiten nach DIN 1164, Teil 7 ermittelt.

**Tabelle 2**

| **28 Tage Festigkeitswerte** | | | |
|---|---|---|---|
| Beispiel | organische Säure | organische Säure % | Festigkeiten (0,35 % Al₂O₃) in N/mm² nach 28 Tagen |
| Blind | - | - | 51,6 |
| 40 | Mis. 80 % | 5,96 | 52,4 |
| 41 | Glycs. 65% | 3,82 | 50,6 |
| 42 | Glycs. 65 % | 5,96 | 51,9 |
| 43 | CS · 1H₂O | 0,31 | 50,0 |
| 44 | Oxs · 2 H₂O | 3,34 | 51,1 |
| 45 | CS · 1H₂O | 0,94 | 50,0 |
| 46 | PAS 50 % | 1,85 | 50,6 |
| 47 | PAS 50 % | 3,58 | 49,9 |

### Abbindezeiten (Tabelle 1)

Eingesetzt wurden jeweils 290 g der Zement-Type PZ35F (Heidelberger Zement)
Die Abbindezeiten wurden gemäß der Vicat-Methode ermittelt. Der Wasser-Zement-Faktor betrug 0,41. Alle in der **Tabelle 1** unter der Spalte "Abbindezeiten" angegebenen Gehalte an Al₂O₃ beziehen sich auf das Bindemittel.

### Festigkeiten (Tabelle 2)

Die 28-Tage-Festigkeiten werden gemäß DIN 1164, Teil 7 ermittelt. Alle in der **Tabelle 2** unter der Spalte "Festigkeiten" angegebenen Gehalte an Al₂O₃ beziehen sich auf das Bindemittel. Die DIN-Norm ist beigefügt.

**Tabelle 1**

| **Einsatzmengen an organischen Säuren bei der Herstellung der erfindungsgemäßen Aluminiumverbindungen und deren Wirkung auf die Abbindezeit** | | | | | | |
|---|---|---|---|---|---|---|
| | | | | Abbindezeiten (min) 0,4 % Al₂O₃ | | pH-Wert des Endproduktes |
| | organische Säure | organische Säure % | Al₂O₃ Gehalt des Endprodukts | Abbindeanfang | Abbindeende | |
| Beispiel Blindwert | - | - | - | 295 | 345 | n.b |
| 1 | Mis. 80 % | 2,36 | 18,6 | 2 | 05:45 | n.b |
| 2 | Mis. 80 % | 2,27 | 17,69 | 01:40 | 03:40 | 6,68 |
| 3 | Mis. 80 % | 2 | 16,2 | 01:45 | 04:30 | 6,15 |
| 4 | Mis. 80 % | 3,5 | 15,95 | 01:30 | 03:10 | 6,67 |
| 5 | Glycs. 65 % | 2,46 | 16,12 | 01:35 | 03:10 | 6,21 |
| 6 | Glycs. 65 % | 4,31 | 15,82 | 01:25 | 02:50 | 6,21 |
| 7 | Cs* 1H2O | 1,75 | 16,24 | 03:45 | 04:45 | 6,7 |
| 8 | Ws | 1,6 | 16,27 | 04:15 | 8 | 6,89 |
| 9 | Äs | 1,6 | 16,27 | 02:40 | 6 | 6,88 |
| 10 | PAS 50% | 3,2 | 16 | 05:30 | 08:30 | 6,96 |
| 11 | - | - | 16,5 | 02:30 | 9 | 7,5 |
| 12 | Mis. 80 % | 2 | 15,07 | 01:40 | 02:40 | 7,23 |
| 13 | Mis. 80 % | 3,5 | 14,84 | 01:30 | 02:15 | 6,88 |
| 14 | Mis. 80 % | 5,92 | 14,27 | 01:20 | 02:10 | 6,19 |
| 15 | Glycs. 65 % | 2,46 | 15 | 01:45 | 3 | 7,32 |
| 16 | Glycs. 65 % | 4,31 | 14,72 | 01:20 | 2 | 6,89 |
| 17 | Glycs. 65 % | 7,38 | 14,24 | 01:30 | 2 | 6,14 |
| 18 | Cs* 1H2O | 1,75 | 15,11 | 03:30 | 5 | 7,35 |
| 19 | Cs* 1H2O | 3,06 | 14,91 | 4 | 5 | 6,78 |
| 20 | WS | 1,6 | 15,13 | 03:50 | 5 | 7,69 |
| 21 | ÄS | 1,6 | 15,13 | 02:45 | 03:30 | 7,73 |
| 22 | PAS 50% | 3,2 | 14,89 | 04:30 | 06:10 | 7,42 |
| 23 | PAS 50% | 5,6 | 14,52 | 05:45 | 8 | 8,5 |
| 24 | - | - | 15,4 | 02:45 | 6 | 7,87 |
| 25 | - | - | 18,8 | 4 | 25 | 6,8 |
| 26 | Mis. 80 % | 3,5 | 18,14 | 03:30 | 05:30 | 6,83 |
| 27 | Glycs. 65 % | 4,31 | 17,99 | 03:10 | 04:45 | 7,29 |
| 28 | Mis. 80 % | 2 | 18,42 | 02:45 | 7 | 7,33 |
| 29 | Cs* 1H2O | 1,75 | 18,47 | 05:15 | 07:15 | 7,48 |
| 30 | PAS 50% | 3,2 | 18,2 | 06:30 | 17 | 7,48 |
| 31 | Mis. 80 % | 3 | 16,4 | 01:20 | 02:20 | n.b. |
| 32 | Glycs. 65 % | 3 | 16,4 | 01:25 | 2 | n.b. |
| 33 | Mis. 80 % | 13,52 | 10,1 | 06:45 | 07:35 | n.b. |
| 34 | Mis. 80 % | 2 | 12,7 | <1:00 | 1:45 | n.b. |
| 35 | Glycs. 65 % | 2,29 | 12,6 | 1:10 | 2 | n.b. |

Am Beispiel der Daten in Tabelle 1 erkennt man deutlich, daß die Zeiten für das Abbindeende für die erfindungsgemäßen Aluminiumverbindungen , abgesehen von zwei Ausnahmen (Bsp. 22 und 23), kürzer sind, als die Zeiten für die unbehandelten Filterkuchen in den Bsp. 11, 24 und 25.

### Vergleichsbeispiele:

In den Beispielen 48 und 49 wurde der Zusatze von einer Carbonsäure allein, z.B. von Milchsäure und einem basischen Aluminiumhydroxydsulfat auf die Abbindezeiten in Portlandzement untersucht. Die gemessenen Werte der Abbindezeiten sind in der Tabelle 3 aufgelistet. Man sieht deutlich, daß diese Verbindungen längere Abbindezeiten haben, als die erfindungsgemäßen Aluminiumverbindungen. Der Blindwert bezieht sich auf einen Versuch ohne abbindebeschleunigenden Zusatz.

**Tabelle 3**

| **Beispiel** | **Verbindung** | **Konzentration bezügl. d. Bindemittels** | **Abbindezeiten [min] Anfang** | **Ende** |
|---|---|---|---|---|
| | | | | |
| Blindwert | - | - | 295 | 345 |
| Beispiel 48 | Mis 80 % | 0,53 % | 250 | 345 |
| Beispiel 49 | bas. Alu.sulfat | 0,6 % (Al₂O₃) | 02:50 | 05:10 |

**In den Tabellen verwendete Abkürzungen:**

| | |
|---|---|
| Mis. 80 % | Milchsäure 80 % |
| Gycs. 65 % | Glycolsäure 65 % |
| CS 1H₂O | Citronensäure 1H₂O |
| WS | Weinsäure |
| ÄS | Äpfelsäure |
| OXS·2H₂O | Oxalsäure·2H₂O |
| PAS | Polyacrylsäure |

## Patentansprüche

1. Aluminiumverbindungen der allgemeinen Formel
Al(OH)ₐ(CO₃)_{b}(SO₄)_{c}R_{d}
wobei a= 3-2b-2c-xd ist,
mit x= Basizität einer organischen Säure
und weiterhin b, c und d folgende Werte haben können:
b = 0,05 bis 0,5
0 < c ≤ 0,4
d = 0,01/x bis 0,9/x
wobei R das Anion R'COO⁻ einer organischen Carbonsäure, insbesondere einer Hydroxycarbonsäure, Polyhydroxycarbonsäure und Polycarbonsäure ist.

2. Aluminiumverbindungen gemäß Anspruch 1, dadurch gekennzeichnet, daß als organische Säuren Milchsäure, Glykolsäure, Oxalsäure, Äpfelsäure, Weinsäure, Citronensäure, Polyacrylsäure oder deren Salze oder Mischungen dieser Säuren bzw. deren Salze eingesetzt werden.

3. Aluminiumverbindungen gemäß den Ansprüchen 1 bis 2, dadurch gekennzeichnet, daß zu ihrer Herstellung als Al-haltige Komponenten Eloxallauge, Aluminiumchlorid aus der Friedel Crafts Synthese und Abfallschwefelsäure verwendet werden.

4. Herstellung der Aluminiumverbindungen gemäß den Ansprüchen 1 bis 3, dadurch gekennzeichnet, daß Aluminiumhydroxycarbonate und Aluminiumhydroxycarbonatsulfate, hergestellt durch eine Fällungsreaktion ausgehend von sauren Aluminumsalzen und Laugen, Carbonaten, Hydrogencarbonaten und Laugen in Kombination mit Kohlendioxid oder ausgehend von Aluminaten und Säuren in Gegenwart von Carbonaten, Hydrogencarbonaten und/oder Kohlendioxid oder ausgehend von Aluminaten und sauren Aluminiumsalzen in Gegenwart von Carbonaten, Hydrogencarbonaten und/oder Kohlendioxid, nach erfolgter Filtration bzw. Zentrifugation und Waschung, mit Hydroxycarbonsäuren, Polyhydroxycarbonsäuren, Polycarbonsäuren oder deren Mischungen durch Vermischen des Filterkuchens mit den organischen Säuren zur Reaktion gebracht werden.

5. Aluminiumverbindungen gemäß den Ansprüchen 1 - 4, dadurch gekennzeichnet, daß sie zum beschleunigten Abbinden und Erhärten eines hydraulischen Bindemittels wie Zement, sowie davon hergestelltem Mörtel und Beton verwendet werden.

## Claims

1. Aluminium compounds of general formula
Al(OH)ₐ(CO₃)_{b}(SO₄)_{c}R_{d}
wherein a = 3-2b-2c-xd,
and x = basicity of an organic acid,
and where b, c and d can have the following values:
b = 0.05 to 0.5
0 < c ≤ 0.4
d = 0.01/x to 0.9/x
wherein R is the anion R'COO⁻ of an organic carboxylic acid, especially of a hydroxycarboxylic acid, polyhydroxycarboxylic acid and polycarboxylic acid.

2. Aluminium compounds according to claim 1,
characterised in that the following are used: lactic acid, glycolic acid, oxalic acid, malic acid, tartaric acid, citric acid, polyacrylic acid or the salts thereof, or mixtures of these acids or the salts thereof.

3. Aluminium compounds according to claims 1 to 2,
characterised in that Eloxal leach, aluminium chloride from the Friedel Crafts synthesis and waste sulphuric acid are used as Al-containing components.

4. Aluminium compounds according to claims 1 to 3,
characterised in that aluminium hydroxycarbonate and aluminium hydroxycarbonate sulphate, produced by a precipitation reaction based on acidic aluminium salts and leaches, carbonates, hydrogen carbonates and leaches in combination with carbon dioxide or or based on aluminates and acids in the presence of carbonates, hydrogen carbonates and/or carbon dioxide, or based on aluminates and acidic aluminium salts in the presence of carbonates, hydrogen carbonates and/or carbon dioxide, are brought to reaction, after filtration or centrifuging and washing, with hydroxycarboxylic acids, polyhydroxycarboxylic acids, polycarboxylic acids or mixtures thereof by mixing the filter cake with the organic acids.

5. Aluminium compounds according to claims 1 to 4,
characterised in that they are used to accelerate bonding and hardening in a hydraulic bonding agent such as cement, and also mortar and concrete produced therefrom.

## Revendications

1. Composés d'aluminium de la formule générale
Al(OH)ₐ(CO₃)_{b}(SO₄)_{c} R_{d}
dans laquelle a = 3-2b-2c-xd,
x représente la basicité d'un acide organique
et b, c et d peuvent posséder en outre les valeurs suivantes:
b = 0,05 à 0,5
0 < c ≤ 0,4
d = 0,01/x bis 0,9/x
R correspond à l'anion R'COO⁻ d'un acide carboxylique organique, en particulier, d'un acide hydroxycarboxylique, polyhydroxycarboxylique et polycarboxylique.

2. Composés d'aluminium selon la revendication 1, caractérisés en ce que l'on met en oeuvre comme acides organiques, les acides lactique, glycolique, oxalique, maléique, tartrique, citrique et polyacrylique ou les sels de ceux-ci, ou des mélanges de ces acides ou des sels de ceux-ci.

3. Composés d'aluminium selon les revendications 1 à 2, caractérisés en ce que l'on utilise comme composants alumineux pour leur production, de la lessive d'anodisation, du chlorure d'aluminium issu de la synthèse de Friedel Crafts et de l'acide sulfurique résiduaire.

4. Production des composés d'aluminium selon les revendications 1 à 3, caractérisée en ce que des hydroxycarbonates d'aluminium et sulfate d'hydroxycarbonates d'aluminium, produits par une réaction de précipitation à partir de sels acides d'aluminium et de lessives alcalines, de carbonates, d'hydrogénocarbonates et de lessives alcalines, en association avec du dioxyde de carbone, ou à partir d'aluminates et d'acides en présence de carbonates, d'hydrogénocarbonates et/ou de dioxyde de carbone, ou à partir d'aluminates et de sels acides d'aluminium en présence de carbonates, d'hydrogénocarbonates et/ou de dioxyde de carbone, sont mis à réagir après filtration ou centrifugation et lavage, avec des acides hydroxycarboxyliques, polyhydroxycarboxyliques, polycarboxyliques ou avec des mélanges de ceux-ci, par mélangeage du gâteau de filtration avec les acides organiques.

5. Composés d'aluminium selon les revendications 1 à 4, caractérisés en ce qu'ils sont utilisés pour la prise et le durcissement accélérés d'un liant hydraulique tel que le ciment, ainsi que du mortier et du béton produits à partir de celui-ci.
